# EUROPÄISCHE PATENTSCHRIFT

(11) **EP 0 820 630 B1**
(45) Veröffentlichungstag und Bekanntmachung des Hinweises auf die Patenterteilung: **13.01.1999**
(21) Anmeldenummer: 96909023.2
(22) Anmeldetag: 09.04.1996
(51) Int. Cl.: H04N 7/14, G11B 20/10

(54) **VERFAHREN UND EINRICHTUNG ZUM SPEICHERN, SUCHEN UND ABSPIELEN VON AUDIOVISUELLEN INFORMATIONEN UND DATENFILES**
METHOD AND DEVICE FOR STORING, SEARCHING FOR AND PLAYING BACK AUDIOVISUAL DATA AND DATA FILES
PROCEDE ET DISPOSITIF POUR LA MEMORISATION, LA RECHERCHE ET LA REPRODUCTION D'INFORMATIONS AUDIOVISUELLES ET DE FICHIERS DE DONNEES

(30) Priorität: 13.04.1995 DE 19514103
(43) Veröffentlichungstag der Anmeldung: 28.01.1998
(73) Patentinhaber: SIEMENS AKTIENGESELLSCHAFT, 80333 München (DE)
(72) Erfinder: SEBESTYEN, Istvan, D-81476 München (DE)
(86) Internationale Anmeldenummer: DE9600618
(87) Internationale Veröffentlichungsnummer: WO9632717

(56) Entgegenhaltungen:
- EP-A- 0 453 128
- EP-A- 0 535 890
- AT & T TECHNICAL JOURNAL, Bd. 72, Nr. 1, 1.Januar 1993, Seiten 50-66, XP000367735 ACKLAND B D: "A VIDEO-CODEC CHIP SET FOR MULTIMEDIA APPLICATIONS"
- NEC RESEARCH AND DEVELOPMENT, Bd. 32, Nr. 4, 1.Oktober 1991, TOKYO, Seiten 557-568, XP000289781 ENDO Y ET AL: "DEVELOPMENT OF CCITT STANDARD VIDEO CODEC: VISUALINK 5000"
- ADVANCED IMAGING, JUNE 1995, USA, Bd. 10, Nr. 6, Juni 1995, ISSN 1042-0711, Seite 32, 34, 36, 38 XP000578464 DAVIS A W: "Videoconferencing via POTS now: proprietary codecs and emerging standards"
- OPTICAL ENGINEERING, Bd. 35, Nr. 1, 1.Januar 1996, BELLINGHAM(USA), Seiten 109-112, XP000574517 SCHAPHORST R A: "STATUS OF H.324 - THE VIDEOCONFERENCING STANDARD FOR THE PUBLIC SWITCHED TELEPHONE NETWORK AND MOBILE RADIO"

## Beschreibung

Verfahren und Einrichtung zum Speichern, Suchen und Abspielen von audiovisuellen Informationen und Datenfiles.

Die Erfindung betrifft ein Verfahren und eine Einrichtung zum Speichern, Suchen und Abspielen von audiovisuellen Informationen und Datenfiles. Insbesondere betrifft sie somit ein Multimedia-Speichergerät.

Die Speicherung und das Abspielen von Multimediainformationen (Video, Audio, Daten, Steuer-Informationen) auf digitalen Speichermedien (z.B. CD-ROM, optisch beschreibbare Festplatte, magnetische Festplatte) ist eine der wichtigsten Funktionen in Multimedia-Systemen.

Obwohl die Kapazität der speicherbaren Informationen auf digitalen Speichermedien stetig wächst, bereitet die große Datenmenge von Multimedia-Informationen immer noch ein massives Speicherproblem.

Eine erfindungsgemäße Anordnung ermöglicht gegenüber den bekannten Verfahren eine wesentlich höhere Kompression, ein effektiveres Multiplexing und eine effektivere Steuerung von multimedialen Datenströmen (s. Tabelle 1).

Dagegen erlaubt das standardisierte Verfahren ISO/IEC 11172 - auch als MPEG-1 bekannt - mit 1,5 Mbits/s die Speicherung von ungefähr 1 Stunde audiovisuelle Information auf CD-ROM. Auch andere, nicht standardisierte audiovisuelle Kompressionsverfahren, die in PC-Anwendungen verbreitet sind, ermöglichen bei schlechterer Bild- und Ton-Qualität ungefähr 1 Stunde gespeichertes audiovisuelles Programm.

**Tabelle 1 -**

| **Beispiele für Abspieldauer von auf ITU H.324 basierenden multimedialen Speicherlösungen** | | | | |
|---|---|---|---|---|
| **Medium:** | **Speicher Volumen (MByte):** | **Abspieldauer bei 32** **kbit/s** **QCIF (180 x 144)** **Bildauflösung bei** **H.263;** **G.723;** **G4kbit/s Audio** | **Abspieldauer bei 128** **kbit/s** **CIF (360 x 288)** **Bildauflösung bei** **H.263;** **G.723; G.728;** **G.729 Audio** | **Abspieldauer bei** **512 kbit/s** **ITU-R 601 (720 x 576)** **Bildauflösung bei H.263;** **G.728, G.729;** **G.722 Audio** |
| Diskette: | 1,4 | etwa 6 Minuten | - | - |
| CD-ROM: | 660 | etwa 46 Stunden | etwa 11 Stunden | etwa 2,5 Stunden |
| Beispiel Datei: | 10 | etwa 41 Minuten | etwa 10 Minuten | - |
| Festplatte / Minute | - | etwa 240 kByte/min | etwa 1 Mbyte/min | etwa 4 Mbyte/min |
| Beispiel Festplatte: | 540 | etwa 38 Stunden | etwa 9 Stunden | etwa 2,25 Stunden |

Die Qualität des MPEG-1 Videos und der MPEG-1 Audio ist in der Regel zwar besser als die in der Tabelle 1 aufgelistete Verfahren, es gibt jedoch zahlreiche Anwendungen, wo eine verminderte Video- und Audio-Qualität vollkommend ausreicht (z.B. Multimedia - Mail, Video-Bilder mit Kopf und Schulter, Multimedia-Lexika).

Die Erfindung macht sich bedarfsweise - abhängig von den einzelnen Realisierungsformen und Besonderheiten - die folgenden Informationstechnologie- und/oder Kommunikationstechnologie-Standards zunutze:
• Die in der ITU-T gegenwärtige Normierung von Sprachkodierern mit sehr niedrigen Bitraten für das Bildfernsprechen (ITU-T G.723) im öffentlichen Telefonwählnetz (GSTN) führt zu quali-tativ guten Sprachkodierern (annähernd der Qualität der CCITT G.726 Empfehlung) mit Übertragungsgeschwindigkeit von 5,3-6,3 kbit/s. Auch der ITU-T G.729-Sprachkoder ermöglicht eine digitale Sprachübertragung mit 8 kbit/s Geschwindigkeit. In der Zukunft wird auch ein 4 kbit/s Coder standardisiert (ITU-T G.4kbit/s). Diese Codecs sind derzeit die leisungsfähigsten Sprachcodecs:
• Die in der gegenwärtige ITU-T-Normierung von Bewegtbildkodierern mit sehr niedriger Bitraten z.B. für das Bildfernsprechen im öffentlichen Telefonwählnetz (ITU-T H.263) führt zu qualitativ guten Bewegtbildkodierern (QCIF Auflösung 180 x 144 und weniger) mit der minimal benötigten Übertragungsgeschwindigkeit von 8-24 kbit/s (bzw. höher), die eine gesicherte Übertragungsart (z.B. mit ITU-T H.223) erfordern. Eine Erhöhung der Bildauflösung über die im Standard definierten Werte z.B. auf CIF (360 x 288) oder ITU-T 601 (720 x 576) erlaubt die Übertragung von Bewegtbilden mit Fernsehen- bzw. Bewegtbilder gemäß der Auflösung der digitaler Studio-Norm ITU-R 601.
• Die gegenwärtige Normierung in der ITU-T von Multiplexing von audiovisuellen Datenarten mit sehr niedrigen Bitraten z.B. für das Bildfernsprechen im öffentlichen Telefonwählnetzen mit Übertragungsgeschwindigkeit von 9,6-32 kbit/s (und höher), die eine gesicherte Übertragungsart (ITU-T H.223 gemäß) ermöglicht. Dieses Prinzip kann auch für Speichersysteme angewendet werden.
• Die gegenwärtige ITU-T-Normierung (ITU-T H.245) bezüglich dem Steuern von audiovisuellen Datenarten mit sehr niedrigen Bitraten, beispielsweise für das Bildfernsprechen im öffentlichen Telefonwählnetzen, die eine flexible Zuordnung von bis zu 15 unabhängigen Nutzkanälen, jeweils mit Audio/Sprache-, Video- oder Dateninformation ermöglicht. Dieses Prinzip kann auch für Speichersysteme angewendet werden. Jeder Kanal verfügt über eine flexible Bandbreite, die von Anwendung zu Anwendung im Laufe der Speicher-Anwendung beliebig variieren kann.

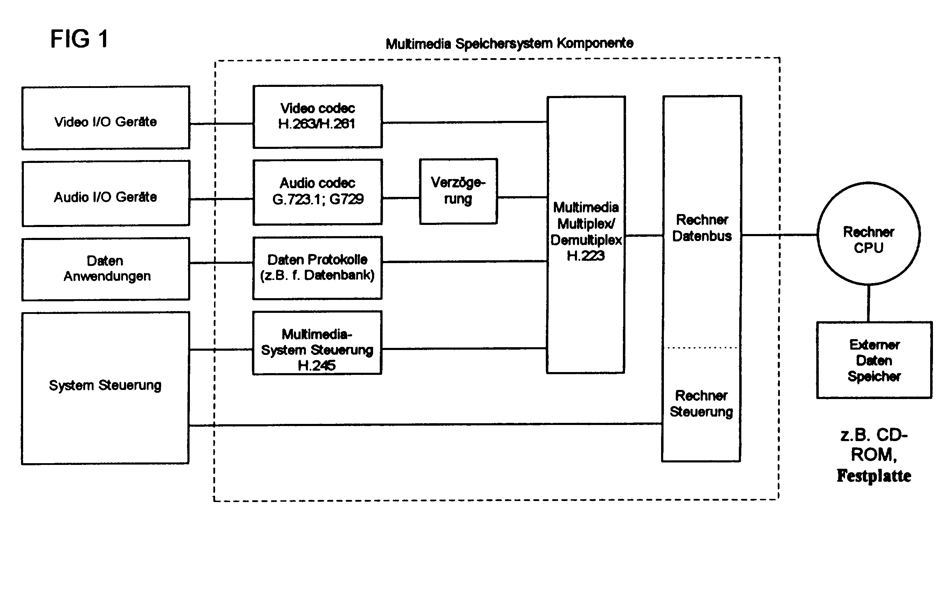

Figur 1 zeigt das Blockdiagramm eines Ausführungsbeispiels eines erfindungsgemäßen Multimedia-Speichersystems.

Ein Multimediales-Speichersystem besteht aus mehreren Funktionseinheiten. Die Video-I/O-Geräte (Input/Output) enthalten z.B. eine Kamera, einen Bildschirm und eine Bildaufbereitungseinheit für das Einblenden von mehreren Bildern ("splitscreen"). In einer günstigen Ausgestaltung können alle Geräte tatsächlich angeschlossen werden. Die Audio/Sprach-I/O-Geräte schließen das Mikrofon (oder mehrere), den Lautsprecher (oder mehrere), und die Audio/Sprachaufbereitungs-einheit (z.B. für Echounterdrückung) ein. Auch hier können in einer günstigen Ausgestaltung alle Geräte tatsächlich angeschlossen sein. Die Systemsteuerung steuert das Gesamtsystem, d.h., sie sorgt für die Multimedia-Steuerung für den Multimedia-Multiplexer und für die gesamte Multimedia-System-Steuerung. Der Video-Codec sorgt für die digitale Kompression und Dekompression des Videosignals beim Video-Enkoder bzw. Video-Dekoder. Der Audio/Sprach-Codec sorgt für die digitale Kompression/Dekompression des Audio/Sprachsignals. Eine wahlweise Verzögerung des Sprachsignals kann vorgenommen werden um die Lippen-synchronisation zwischen Video und Sprache zu erreichen. Der Multiplexer/Demultiplexer legt beim multimedialen Abspeichern die Audio-, Video- und Datensignale in einem gemeinsamen Datenstrom zusammen, bzw. trennt beim Abruf aus der multimedialen Datenbank den gemeinsamen multimedialen Datenstrom in getrennte Audio-,Video- und Datensignale auf.

Die System-Steuerung besteht aus der Steuerung des Multimedia-Multiplexing (nach ITU-T H.245), und des gesamten Multimedia-Spechersystems (z.B. Laden/Beenden des Multimedia Speicher Programms im Rechner).

Bei dem Multimedia-Multiplexing nach ITU-T H.245 kann man bis zu 15 Nutz-Kanäle eröffnen und benutzen. Vor dem Abspeichern der Nutzkanäle erfolgt nach H.245 eine Aushandlung und Einstellung der Benutzerparameter. Dabei signalisiert der Daten-Speicher die breiteste Möglichkeit der Speicherung von multimedialen Informationen, und die speichernde Anwendung entscheidet letztendlich und wählt aus, welche multimedialen Kanäle eröffnet werden sollen und wie die multimediale Speicherung in den Daten-Speicher erfolgen soll.

Bei der Speicherung einer audiovisuellen Nachricht ("Voice-Mail") könnten beispielsweise ein Kanal für Video, ein Kanal für Sprache, ein Datenkanal für die "Voice-Mail" Steuerung (Addressierung, Zeit des "Voice-Mails" Ablegens u.s.w.) und den obligatorische ITU-T H.245 Multimedia-Steuerkanal eröffnet werden.

Bei der Speicherung eines audiovisuellen deutsch-französischen Sprachkurses könnten beispielsweise ein Kanal für Video, je ein Kanal für Ton in deutscher und in französischer Sprache, je ein Datenkanal für den deutschen und für den französischen Begleit-Text, ein Daten-Kanal für die Sprachkurs-Programm-Steuerung, und den obligatorischen ITU-T H.245 Multimedia-Steuerkanal eröffnet werden.

Bei der Speicherung einer Sportfilm-Sequenz (z.B. Fußball) könnte beispielsweise zunächst ein Kanal dem Ton und ein Kanal dem Bild zugeordnet werden. Nach einem Tor z.B. könnten z.B. kurzfristig fünf Kanäle für Video zugeordnet werden. Jedem Kanal wird eine andere Kameraeinstellung zugewiesen. Dadurch könnte der Anwender beim Abspielen dynamisch eine beliebige Kameraeinstellung (z.B. von oben, aus der Torperspektive, von hinten, von der Seite) auswählen.

Auch vor dem Abspielen der Nutzkanäle erfolgt ein Aushandeln und Einstellen der Benutzerparameter nach ITU-T H.245. Dabei signalisiert der Daten-Speicher die breitest mögliche Speicherung von multimedialen Informationen. Auch hier trifft letztendlich die abspielende Anwendung (d.h. das Multimedia-Speichersystem) die Auswahl der zu eröffnenden Multimedia-Kanäle und legt fest, wie das multimediale Abspielen aus dem Daten-Speicher erfolgen soll.

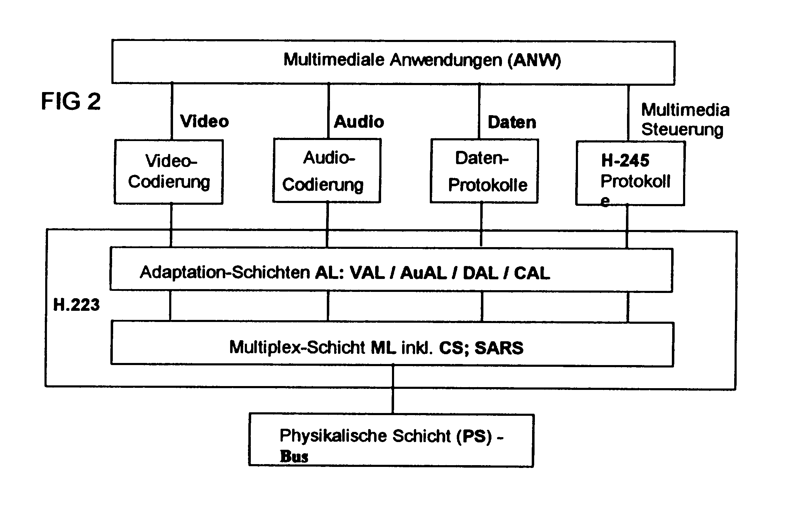

Das Multimedia-Multiplexing ist in Figur 2 dargestellt. Die unterste Schicht PS ist die physikalische Schicht. Diese wird im Rechner-Bus, der Schnittstelle zwischen dem externen Digital-Speicher (CD-ROM, Festplatte usw.) und dem Multimedia-Multiplexing, realisiert. Der Multiplexer (ähnlich ITU-T H.223, mit dem Unterschied, daß multimediale Daten nicht für ein analoges Telefonnetz, sondern für den BUS eines Rechners bereitgestellt werden) verfügt über zwei Schichten: Eine sog. Adaptations-Schicht ("Adaptation Layer") AL und eine Multiplex-Schicht ("Multiplex Layer") ML. Die Adaptations-Schicht AL ist zuständig für die Anpassung der diversen Informationsströme - die von den verschieden Media-Quellen (Video, Audio/Sprache, Daten) stammen - an die Multiplex-Schicht ML. In Figur 2 sind vier Adaptations-Schichten AL spezifiert, eine Daten-Adaptationsschicht ("Data Adaptation Layer") DAL, eine Audio/Sprach-Adaptations-Schicht ("Audio Adaptation Layer") AuAL, eine Video Adaptations Schicht ("Video Adaptation Layer") VAL und eine Steuerungs-Adaptations-Schicht ("Control Adaptation Layer) CAL zur Übertragung von Multimedia-Steuerdaten. Jede Adaptations Schicht bedient sich in der Multiplex-Schicht ML der Dienste einer sog. Konvergenzunterschicht ("Convergence Sublayer") CS und einer sog. Segmentierungs/Zusammensetungs-Unterschicht ("Segmentation and Reassembly Sublayer") SARS. Die Konvergenzunterschicht CS sorgt für Fehlererkennung und für die Fehlerkorrektur. Die Segmentierungs/Zusammensetungs-Unterschicht SARS sorgt für die Fregmentierung der Datenströme in sog. SAR-SDUs ("SDU - Service Data Unit"), zugeschnitten für die Multiplex-Schicht ML.

Über der Video-Adaptionsschicht AL befindet sich der Video-Codec (Video), der die Video-Informationen codiert bzw. decodiert. Über der Audio-Adaptionsschicht AL befindet sich der Audio-Codec (Audio), der die Audio-Informationen codiert bzw. decodiert. Über der Daten-Adaptionsschicht AL (Daten) befinden sich die für die Datenanwendung notwendigen Datenprotokolle. Ein spezieller Datenkanal ist den ITU-T H.245-Multimedia-Steuerungs-Protokollen zugeordnet.

Die Adaptionsschichten AL zeigen beim Speichern Übertragungsfehler an, es werden Fehlerkorrekturen veranlaßt. Ferner fragmentiert die Adaptionsschicht AL die Informationsströme in kleinere Einheiten. Die Multiplex-Schicht ML sorgt für das Multiplexen der verschiedenen Informationstypen, die von den Adaptionsschichten AL vorbereitet werden.

Die Multiplex-Schicht ML sorgt beim Zugreifen/Abspielen für das Demultiplexing des angekommenen Datenstromes in Datenfragmente der verschiedenen Informationsstypen, die an die jeweils zuständige Adaptionsschicht AL weitergeleitet werden. Die Adaptionsschichten AL setzen aus den Datenfragmenten die einzelnen Datenströme zusammen, die an die Anwendungen (Sprache/Audio, Video, Daten, Multimedia Steuerung) weitergeleitet werden.

## Patentansprüche

1. Verfahren zum Speichern, Suchen und Abspielen von hochkomprimierten audiovisuellen Informationen und Datenfiles eines Multimedia-Speichergerätes unter Verwendung eines Multimedia-Multiplexing- und Multimedia-Steuerungs-Protokolls mit den folgenden Verfahrensschritten:
a) Multimedia-Informationströme werden in einem ersten separaten virtuellen Steuerkanal gemäß ITU-T H.245 zum Ermöglichen von flexibler Zuordnung und gleichzeitiger Behandlung von mehreren Audio/Sprach, Video und Datenkanälen für Multimedia Kommunikation gesteuert;
b) Video- und/oder Audio/Sprach- und/oder Dateninformationen und/oder Steuerinformation werden zum Ermöglichen flexibler Zuordnung von Kanalkapazitäten entsprechend der momentanen Bedürfnisse der beim genannten Steuern zugeordneten Kanäle nach ITU-T H.223 gemultiplext bzw. demultiplext;
c) Videosignale werden - vorzugsweise gemäß ITU-T H.263 - komprimiert und kodiert, bzw. dekomprimiert und dekodiert;
d) die Audio- bzw. Sprachsignale werden unter Verwendung eines hochkomprimierenden Sprachkompressionsalgorithmus komprimiert bzw. dekomprimiert;
e) das Multimedia-Speichergerät wird über einen zweiten separaten virtuellen Steuerkanal gesteuert.

2. Einrichtung zum Speichern, Suchen und Abspielen von hochkomprimierten audiovisuellen Informationen und Datenfiles eines Multimedia-Speichergerätes unter Verwendung eines Multimedia-Multiplexing- und Multimedia-Steuerungs-Protokolls,
- mit einer Informationsstromsteuerung zum Steuern der Multimedia-Informa-tionströme in einem separaten virtuellen Steuerkanal gemäß ITU-T H.245, um eine flexible Zuordnung und die gleichzeitige Behandlung mehrerer Audio/Sprach-, Video- und Datenkanäle für Multimedia Kommunikation zu ermöglichen;
- mit einem Multiplexer und Demultiplexer zum Multiplexen bzw. Demultiplexen von Video- und/oder Audio/Sprach- und/oder Dateninformationen und/oder Steuerinformation nach ITU-T H.223, um eine flexible Zuordnung von Kanalkapazitäten entsprechend der momentanen Bedürfnisse der durch die genannte Steuerung zugeordneten Kanäle zu ermöglichen;
- mit einer Videokompressions- und Kodierungsvorrichtung zum Komprimieren und Kodieren und mit einer Video-Dekompressions-und Dekodierungsvorrichtung zum Dekomprimieren und Dekodieren von Videosignalen vorzugsweise gemäß ITU-T H.263;
- mit einer Audio/Sprachkompressions- und Audio/Sprachdekompressionsvorrichtung zum Komprimieren bzw. Dekomprimieren von Audio- bzw. Sprachsignalen mit einem hochkomprimierenden Sprachkompressionsalgorithmus; und
- mit einer Gerätesteuerung zum Steuern des Multimedia-Speichergeräts über einen weiteren separaten logischen Steuerkanal.

3. Einrichtung nach Anspruch 2, **dadurch gekennzeichnet,** daß der zweite separate virtuelle Steuerkanal ein zusätzlich eröffneter virtueller Datenkanal gemäß ITU-T H.245 ist.

4. Einrichtung nach einem der Ansprüche 2 und 3, **dadurch gekennzeichnet,** daß die Audio/Sprachkompressions- und Audio/Sprachdekompressionsvorrichtung mindestens mit einem Sprachkompressionsalgorithmus nach ITU-T G.723.1, ITU-T G.729, ITU-T G.728, ITU-T G.722, ISO/IEC 11172-3 oder nach ITU-T G.4kbit/s betreibbar ist.

5. Einrichtung nach einem der Ansprüche 2 bis 4, **dadurch gekennzeichnet,** daß das Multimedia-Speichergerät durch einen Computer mit magnetischem Festplattenspeicher realisiert ist.

6. Einrichtung nach einem der Ansprüche 2 bis 4, **dadurch gekennzeichnet,** daß das Multimedia-Speichergerät ein Computer mit einer nur lesenden optischen Speichereinrichtung ist.

7. Einrichtung nach einem der Ansprüche 2 bis 4, **dadurch gekennzeichnet,** daß das Multimedia-Speichergerät ein Computer mit einer schreibenden und lesenden optischen Speichereinrichtung ist.

## Claims

1. Method for storing, searching for and playing back highly compressed audiovisual information items and data files of a multimedia storage unit using a multimedia multiplexing and multimedia control protocol, having the following method steps:
a) multimedia information streams are controlled in a first separate virtual control channel in accordance with ITU-T H.245 for enabling flexible allocation and simultaneous handling of a plurality of audio/voice, video and data channels for multimedia communication;
b) video and/or audio/voice and/or data information items and/or control information are multiplexed and demultiplexed according to ITU-T H.223 for the purpose of enabling flexible allocation of channel capacities in accordance with the instantaneous requirements of the channels which are allocated in the course of the said control;
c) video signals are - preferably in accordance with ITU-T H.263 - compressed and coded, and decompressed and decoded;
d) the audio and/or voice signals are compressed and decompressed using a voice compression algorithm that effects a high level of compression;
e) the multimedia storage unit is controlled via a second separate virtual control channel.

2. Device for storing, searching for and playing back highly compressed audiovisual information items and data files of a multimedia storage unit using a multimedia multiplexing and multimedia control protocol,
- having an information stream control arrangement for controlling the multimedia information streams in a separate virtual control channel in accordance with ITU-T H.245, in order to enable flexible allocation and the simultaneous handling of a plurality of audio/voice, video and data channels for multimedia communication;
- having a multiplexer and demultiplexer for respectively multiplexing and demultiplexing video and/or audio/voice and/or data information items and/or control information according to ITU-T H.223, in order to enable flexible allocation of channel capacities in accordance with the instantaneous requirements of the channels which are allocated by the said control; - having a video compression and coding apparatus for compressing and coding and having a video decompression and decoding apparatus for decompressing and decoding video signals, preferably in accordance with ITU-T H.263;
- having an audio/voice compression and audio/voice decompression apparatus for respectively compressing and decompressing audio and/or voice signals with a voice compression algorithm that effects a high level of compression; and
- having a unit control arrangement for controlling the multimedia storage unit via a further separate logical control channel.

3. Device according to Claim 2, characterized in that the second separate virtual control channel is an additionally instituted virtual data channel in accordance with ITU-T H.245.

4. Device according to either of Claims 2 and 3, characterized in that the audio/voice compression and audio/voice decompression apparatus can be operated at least by a voice compression algorithm according to ITU-T G.723.1, ITU-T G.729, ITU-T G.728, ITU-T G.722, ISO/IEC 11172-3 or according to ITU-T G.4kbit/s.

5. Device according to one of Claims 2 to 4, characterized in that the multimedia storage unit is realized by a computer with a magnetic hard disk store.

6. Device according to one of Claims 2 to 4, characterized in that the multimedia storage unit is a computer with a read-only optical storage device.

7. Device according to one of Claims 2 to 4, characterized in that the multimedia storage unit is a computer with a read/write optical storage device.

## Revendications

1. Procédé pour la mémorisation, la recherche et la reproduction d'informations audiovisuelles et de fichiers de données à taux de compression élevé d'un appareil de mémorisation multimédia, utilisant un protocole de multiplexage multimédia et un protocole de commande multimédia, avec les étapes suivantes :
a) on commande des flux d'informations multimédia dans un premier canal de commande virtuel distinct selon ITU-T H.245 pour permettre l'attribution flexible et le traitement simultané de plusieurs canaux audio/parole, vidéo et de données pour la communication multimédia ;
b) on effectue le multiplexage et le démultiplexage selon ITU-T H.223 d'informations vidéo et/ou audio/parole et/ou de données et/ou d'informations de commande pour permettre une attribution flexible de capacités de canaux selon les besoins momentanés des canaux attribués lors de ladite commande ;
c) on comprime et code ou décomprime et décode des signaux vidéo, de préférence selon ITU-T H.263 ;
d) on comprime ou décomprime les signaux audio, ou de parole, en utilisant un algorithme de compression de la parole à taux de compression élevé ;
e) on commande l'appareil de mémorisation multimédia par l'intermédiaire d'un deuxième canal de commande virtuel distinct.

2. Dispositif pour la mémorisation, la recherche et la reproduction d'informations audiovisuelles et de fichiers de données à taux de compression élevé d'un appareil de mémorisation multimédia, utilisant un protocole de multiplexage multimédia et un protocole de commande multimédia,
- avec une commande de flux d'informations pour commander les flux d'informations multimédia dans un canal de commande virtuel distinct selon ITU-T H.245 afin de permettre une attribution flexible et le traitement simultané de plusieurs canaux audio/parole, vidéo et de données pour la communication multimédia ;
- avec un multiplexeur et démultiplexeur pour multiplexer et démultiplexer des informations vidéo et/ou audio/parole et/ou de données et/ou des informations de commande selon ITU-T H.223 afin de permettre une attribution flexible de capacités de canaux selon les besoins momentanés des canaux attribués par ladite commande ;
- avec un dispositif de compression et de codage vidéo pour comprimer et coder et avec un dispositif de décompression et de décodage vidéo pour décomprimer et décoder des signaux vidéo de préférence selon ITU-T H.263 ;
- avec un dispositif de compression audio/parole et un dispositif de décompression audio/parole pour comprimer et décomprimer des signaux audio ou de parole avec un algorithme de compression de la parole à taux de compression élevé ; et
- avec une commande d'appareil pour commander l'appareil de mémorisation multimédia par l'intermédiaire d'un autre canal de commande logique distinct.

3. Dispositif selon la revendication 2, caractérisé par le fait que le deuxième canal de commande virtuel distinct est un canal de données virtuel ouvert supplémentaire selon ITU-T H.245.

4. Dispositif selon l'une des revendications 2 et 3, caractérisé par le fait que le dispositif de compression audio/parole et le dispositif de décompression audio/parole peuvent fonctionner au moins avec un algorithme de compression de la parole selon ITU-T G.723.1, ITU-T G.729, ITU-T G.728, ITU-T G.722, ISO/IEC 11172-3 ou ITU-T G.4kbit/s.

5. Dispositif selon l'une des revendications 2 à 4, caractérisé par le fait que l'appareil de mémorisation multimédia est un ordinateur avec une unité de mémorisation à disques magnétiques inamovibles.

6. Dispositif selon l'une des revendications 2 à 4, caractérisé par le fait que l'appareil de mémorisation multimédia est un ordinateur avec un dispositif de mémorisation optique à lecture seule.

7. Dispositif selon l'une des revendications 2 à 4, caractérisé par le fait que l'appareil de mémorisation multimédia est un ordinateur avec un dispositif de mémorisation optique à lecture et à écriture.
